# FASCICULE DE BREVET EUROPEEN

(11) **EP 3 552 412 B1**
(45) Date de publication et mention de la délivrance du brevet: **23.11.2022**
(21) Numéro de dépôt: 17808866.2
(22) Date de dépôt: 30.11.2017
(51) Int. Cl.: H04W 48/20, H04W 12/50, H04W 12/08, H04W 84/12, H04W 48/14, H04W 12/77

(54) **APPAIRAGE D'UN TERMINAL DE TYPE WI-FI A UN POINT D'ACCES DE TYPE WI-FI**
PAARUNG EINES ENDGERÄTS VOM WIFI-TYP MIT EINEM ZUGANGSPUNKT VOM WIFI-TYP
PAIRING A WI-FI TYPE TERMINAL WITH A WI-FI TYPE ACCESS POINT

(30) Priorité: 09.12.2016 FR 1662249
(43) Date de publication de la demande: 16.10.2019
(73) Titulaire: Sagemcom Broadband SAS, 92500 Rueil-Malmaison (FR)
(72) Inventeur: PARISOT, Clément, 92500 Rueil Malmaison (FR); ACEZAT, Laurent, 92500 Rueil Malmaison (FR)
(74) Mandataire: Lavaud, Thomas
(86) Numéro de dépôt international: PCT/EP2017/081040
(87) Numéro de publication internationale: WO 2018/104148

(56) Documents cités:
- US-A1- 2010 046 486
- US-A1- 2012 051 244
- US-A1- 2014 226 819
- US-A1- 2015 220 110
- US-A1- 2016 234 221

## Description

L'invention concerne le domaine de l'appairage d'un terminal de type Wi-Fi à un point d'accès de type Wi-Fi.

### ARRIERE PLAN DE L'INVENTION

L'appairage d'un terminal Wi-Fi, par exemple d'un téléphone mobile, à un point d'accès Wi-Fi, par exemple à un boîtier décodeur (ou *set-top box,* en anglais) ou à une passerelle résidentielle, est classiquement réalisé de la manière suivante.

Le terminal effectue tout d'abord une recherche de réseaux disponibles en scannant son environnement à la recherche de ces réseaux disponibles.

L'utilisateur du terminal sélectionne alors sur le terminal l'un des réseaux disponibles et saisit une clé de chiffrement permettant d'accéder au réseau sélectionné.

La clé de chiffrement est parfois écrite sur une étiquette située sur le point d'accès, ou bien peut être connue de l'utilisateur qui a lui-même défini cette clé de chiffrement via une interface de configuration du point d'accès.

La saisie de la clé de chiffrement peut aussi être réalisée en scannant un code barre de type code QR (pour *Quick Response*). L'utilisation du code QR nécessite généralement de télécharger sur le terminal et d'utiliser une application spécifique.

Il est aussi possible d'appairer le terminal en utilisant le protocole WPS (pour *Wi-Fi Protected Setup*). Le protocole WPS définit une pluralité de configurations pour connecter de manière sécurisée un terminal à un point d'accès, parmi lesquelles on trouve une configuration dite « PBC » (pour *Push-Button Configuration*), qui nécessite d'atteindre un bouton physique sur le point d'accès.

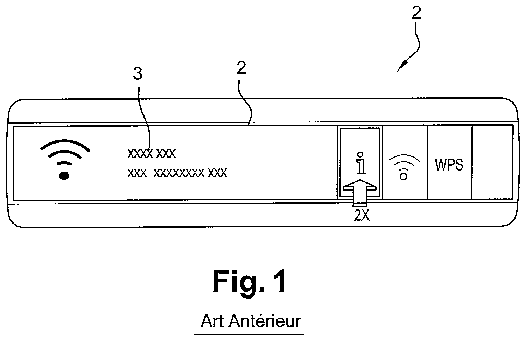

On connaît ainsi un boîtier décodeur de l'art antérieur 1, visible sur la figure 1, qui propose les deux types d'association (appairage via la saisie d'une clé de chiffrement et via l'utilisation d'un protocole WPS). Le boîtier décodeur 1 est équipé d'un écran à cristaux liquides 2 sur lequel le boîtier décodeur 1 affiche la clé de chiffrement 3.

L'appairage du terminal au point d'accès est donc relativement complexe, notamment lorsque l'utilisateur n'est pas familier des nouvelles technologies.

Les demandes de Brevet US2016/234221 et US2012/051244 fournissent des enseignements complémentaires sur le contexte de la présente demande.

### OBJET DE L'INVENTION

L'invention a pour objet de simplifier l'appairage d'un terminal de type Wi-Fi à un point d'accès de type Wi-Fi.

### RESUME DE L'INVENTION

En vue de la réalisation de ce but, on propose un procédé d'appairage d'un terminal de type Wi-Fi à un point d'accès de type Wi-Fi connecté à un afficheur, le procédé d'appairage comportant les étapes, mises en œuvre par le point d'accès :
- de détecter la présence d'un terminal ;
- de détecter si le terminal se trouve à proximité du point d'accès ;
- si la présence du terminal à proximité du point d'accès est détectée, d'afficher sur l'afficheur un message de proposition d'appairage du terminal au point d'accès ;
- lorsqu'un signal d'accord d'appairage est reçu, de fournir une assistance pour appairer le terminal au point d'accès.

L'appairage du terminal au point d'accès est ainsi réalisé à l'initiative du point d'accès, qui fournit une assistance à un utilisateur en possession du terminal si celui-ci souhaite appairer le terminal au point d'accès. Le procédé d'appairage selon l'invention rend ainsi l'appairage plus simple et plus intuitif.

On propose de plus un boîtier décodeur comportant des moyens de traitement agencés pour mettre en œuvre le procédé d'appairage qui vient d'être décrit.

On propose de plus une passerelle comportant des moyens de traitement agencés pour mettre en œuvre le procédé d'appairage qui vient d'être décrit.

On propose aussi un programme d'ordinateur comprenant des instructions pour mettre en œuvre, par un équipement de type boîtier décodeur ou passerelle, le procédé d'appairage qui vient d'être décrit.

On propose en outre des moyens de stockage qui stockent un programme d'ordinateur comprenant des instructions pour mettre en œuvre, par un équipement de type boîtier décodeur ou passerelle, le procédé d'appairage qui vient d'être décrit.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 représente un boîtier décodeur de l'art antérieur ;
- la figure 2 représente les étapes du procédé d'appairage selon l'invention.

### DESCRIPTION DETAILLEE DE L'INVENTION

L'invention est définie par les revendications.

L'invention est ici illustrée dans une situation où un utilisateur visiteur, muni d'un terminal Wi-Fi, en l'occurrence d'un téléphone mobile, se rend chez un utilisateur résident. L'habitation de l'utilisateur résident est équipée d'un point d'accès Wi-Fi, en l'occurrence d'un boîtier décodeur, et d'un téléviseur. Le boîtier décodeur est connecté au téléviseur.

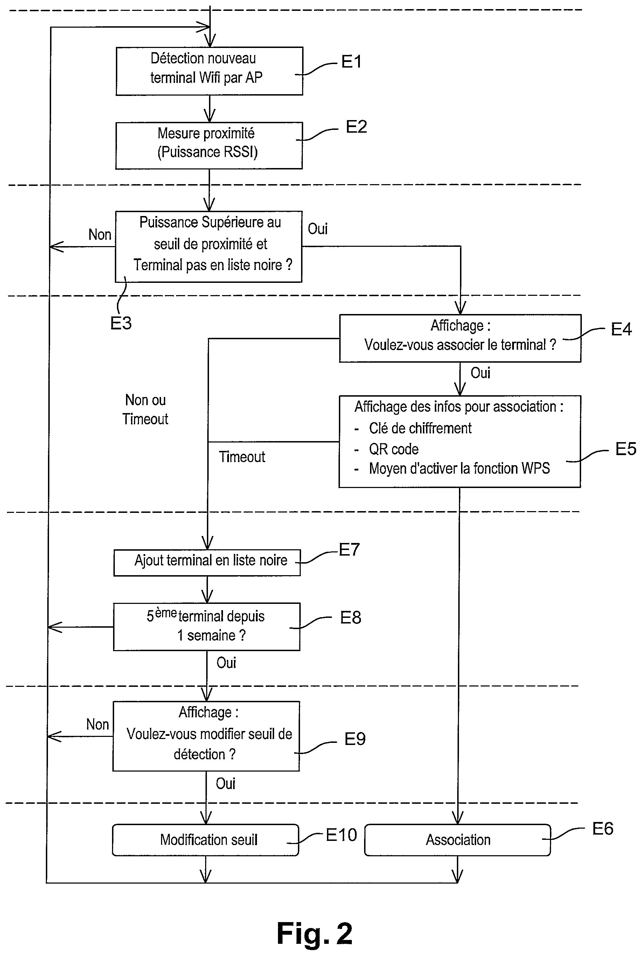

On décrit le procédé d'appairage selon l'invention en référence à la figure 2.

Lorsque l'utilisateur visiteur se trouve chez l'utilisateur résident, le boîtier décodeur détecte la présence du téléphone mobile (étape E1).

La détection de la présence du téléphone mobile est réalisée de la manière suivante.

De manière générale, tout terminal Wi-Fi, tel que le téléphone mobile en possession de l'utilisateur visiteur, qui n'est pas appairé à un point d'accès Wi-Fi, tel que le boîtier décodeur, scanne son environnement à la recherche de réseaux Wi-Fi et de points d'accès. Pour cela, le terminal Wi-Fi émet des trames de requête (ou *probe request*) qui permettent au terminal Wi-Fi de communiquer avec les points d'accès Wi-Fi pour connaître leurs caractéristiques en vue d'un éventuel appairage. On pourra se rapporter à la norme IEEE 802.11 WLAN 2012, et notamment au paragraphe 8.3.3 *Management frames* et, plus particulièrement, au paragraphe 8.3.3.9 *Probe Request frame format,* pour obtenir plus d'informations sur ces trames de requête. Les trames de requête sont ici émises sur tous les canaux disponibles, et comportent la liste des modes d'authentification et des débits supportés par le terminal Wi-Fi. Chaque point d'accès sollicité répond en envoyant des trames de réponse (ou *probe response*) qui contiennent des informations similaires relatives au point d'accès. Cet échange de trames de requête et de trames de réponse est une étape préalable à tout appairage.

Le téléphone mobile est identifiable par son adresse MAC (pour *Medium Access Control*) qui lui est spécifique. Cette adresse MAC est incluse dans les trames de requête émises par le téléphone mobile.

Le boîtier décodeur détecte donc la présence du téléphone mobile lorsque le boîtier décodeur reçoit des trames de requête émises par le téléphone mobile.

Une fois que le boîtier décodeur a détecté la présence du téléphone mobile, le boîtier décodeur détecte si le téléphone mobile se trouve ou non à proximité du boîtier décodeur.

Il n'est en effet pas souhaitable de tenter d'appairer au boîtier décodeur situé chez l'utilisateur résident un terminal Wi-Fi qui se trouve à l'extérieur de l'habitation de l'utilisateur résident, c'est-à-dire, par exemple, dans une maison voisine, dans un appartement voisin, ou dans la rue.

Il n'est par ailleurs pas souhaitable de tenter d'appairer au boîtier décodeur un terminal Wi-Fi qui ne se trouve pas dans la même pièce que le boîtier décodeur. En effet, comme cela va être décrit dans ce qui suit, le procédé d'appairage selon l'invention produit des messages sur l'écran du téléviseur connecté au boîtier décodeur, et il est inutile de tenter d'afficher une information sur l'écran du téléviseur à destination de l'utilisateur visiteur si celui-ci n'a pas accès à ladite information.

La détection de la présence du téléphone mobile à proximité du boîtier décodeur est réalisée de la manière suivante.

Le boîtier décodeur détecte que le téléphone mobile se trouve à proximité de sa propre position lorsque le boîtier décodeur reçoit un signal transmis par le téléphone mobile avec une puissance de réception supérieure à un seuil de puissance prédéterminé.

Le signal utilisé est en l'occurrence formé par les trames de requête émises par le téléphone mobile, et la puissance de réception correspond à une puissance RSSI (pour *Received Signal Strength Indication*).

Le seuil de puissance prédéterminé correspond par défaut à la puissance RSSI d'un terminal situé à une distance de 2 mètres.

Le seuil de puissance prédéterminé dépend de la conception des fonctions radioélectriques du boîtier décodeur et est défini au cours d'opérations de calibration réalisées en laboratoire, préalablement à la fabrication du boîtier décodeur. Les opérations de calibration consistent par exemple à définir la moyenne de mesures de puissance RSSI obtenues, à la distance souhaitée (ici, 2 mètres), pour une pluralité de terminaux Wi-Fi de référence (10 terminaux par exemple) dans un environnement de référence, tel qu'un appartement témoin par exemple.

Ainsi, suite à la détection de la présence du téléphone mobile, le boîtier décodeur mesure la puissance RSSI associée au téléphone mobile (étape E2), puis compare la puissance RSSI mesurée au seuil de puissance prédéterminé (étape E3).

Si la puissance RSSI mesurée est inférieure ou égale au seuil de puissance prédéterminé, le boîtier décodeur ne détecte pas que le téléphone mobile se trouve à proximité du boîtier décodeur, et ne propose donc pas d/appairer le téléphone mobile au boîtier décodeur.

Si la puissance RSSI mesurée est supérieure au seuil de puissance prédéterminé, le boîtier décodeur détecte que le téléphone mobile se trouve à proximité du boîtier décodeur.

Le boîtier décodeur affiche alors sur l'écran du téléviseur un message de proposition d'appairage du téléphone mobile au boîtier décodeur (étape E4). Le message de proposition d'appairage peut apparaître sous la forme d'une fenêtre intruse (ou *pop-up*). Le message est ici du type :

| |
|---|
| Le périphérique [MAC adresse] n'est pas encore connecté à ce réseau. |
| Voules-vous le connecter? Touche [OK] ou [Exit] pour |
| refuser. |

L'utilisateur visiteur peut alors accepter l'appairage via la touche [OK] d'une télécommande du boîtier décodeur. Appuyer sur la touche [OK] revient ainsi à émettre un signal d'accord d'appairage à destination du boîtier décodeur.

L'utilisateur visiteur peut aussi refuser l'appairage via la touche [EXIT] de la télécommande du boîtier décodeur. Appuyer sur la touche [EXIT] revient ainsi à émettre un signal de refus d'appairage à destination du boîtier décodeur.

Si le boîtier décodeur reçoit un signal d'accord d'appairage, le boîtier décodeur affiche sur l'écran du téléviseur un message d'information d'appairage fournissant une assistance pour d'appairer le téléphone mobile au boîtier décodeur (étape E5).

Le message d'information d'appairage comporte ici une clé de chiffrement et un code QR et des instructions de mise en œuvre d'un protocole WPS. Il est bien sûr possible que le message d'information d'appairage ne comporte que certaines de ces informations.

Le message d'information d'appairage est ici du type :

| |
|---|
| Clé de chiffrement : xxxxxxxxxxxxxxxxxxxxxxx. |
| QR code. A scanner avec votre terminal et une application de lecture de code. |
| Pour activer la fonction WPS, appuyer sur touche [OK] de la télécommande. |

L'utilisateur visiteur agit alors conformément à l'assistance fournie par le message d'information d'appairage, et le boîtier décodeur appaire le téléphone Wi-Fi au boîtier décodeur (étape E6). L'utilisateur visiteur a donc accès au réseau WiFi.

Le message d'information d'appairage s'efface après une première durée prédéterminée, par exemple égale à 30 secondes.

Suite à l'étape E4, si le boîtier décodeur reçoit un signal de refus d'appairage ou bien si, suite à l'étape E5, aucune action d'appairage n'est réalisée dans la première durée prédéterminée, l'identifiant du téléphone mobile est mémorisé dans une « liste noire » du boîtier décodeur (étape E7).

La liste noire est une liste d'identifiants de terminaux Wi-Fi pour lesquels il convient de ne pas proposer un appairage avec le boîtier décodeur. La liste noire comprend ainsi les identifiants de terminaux Wi-Fi appartenant aux voisins de l'utilisateur résident, ou bien l'identifiant d'un terminal Wi-Fi de l'utilisateur résident que celui-ci ne souhaite pas appairer avec le boîtier décodeur, ou bien l'identifiant d'un terminal Wi-Fi d'un utilisateur visiteur qui rend visite fréquemment à l'utilisateur résident et qui ne souhaite pas être connecté en Wi-Fi chez l'utilisateur résident.

Ainsi, lorsque l'utilisateur visiteur ou l'utilisateur résident refuse d'appairer un terminal Wi-Fi au boîtier décodeur, ce refus est mémorisé et l'identifiant dudit terminal Wi-Fi est inscrit dans la liste noire. A la prochaine détection dudit terminal Wi-Fi, le boîtier décodeur ne proposera pas de l'appairer au boîtier décodeur.

On évite notamment, grâce à cette liste noire, de se trouver dans une situation où, alors que l'utilisateur résident regarde la télévision, celui-ci se trouve dérangé par des fenêtres *pop-up* qui surgissent à chaque fois que le boîtier décodeur détecte le terminal Wi-Fi d'un voisin.

On note que, au cours de l'étape E3 précédemment décrite, qui consiste à comparer la puissance RSSI mesurée au seuil de puissance prédéterminé, le boîtier décodeur vérifie aussi si le téléphone mobile se trouve ou non dans la liste noire. Si c'est le cas, le boîtier décodeur ne propose pas d'appairer le téléphone mobile au boîtier décodeur.

Suite à l'étape E7, si l'identifiant du téléphone mobile a été mémorisé dans la liste noire, le boîtier décodeur vérifie si le nombre de signaux de refus d'appairage successifs reçus pour des terminaux Wi-Fi différents est supérieur, pendant une deuxième durée prédéterminée, à un seuil de refus prédéterminé. Le seuil de refus prédéterminé est par exemple égal à 5, et la deuxième durée prédéterminée est par exemple égale à une semaine (étape E8).

Cette situation peut notamment être due à un seuil de puissance prédéterminé mal réglé, qui conduit à des détections trop fréquentes de terminaux Wi-Fi. Le boîtier décodeur affiche alors sur l'écran du téléviseur un menu qui permet à l'utilisateur résident de désactiver la fonction correspondant à la mise en œuvre du procédé d'appairage selon l'invention, ou bien qui permet à l'utilisateur résident de diminuer la sensibilité de ladite fonction en proposant différents seuils de puissance prédéterminés correspondant à des distances plus faibles entre le boîtier décodeur et un terminal Wi-Fi (étape E9).

Lorsque l'utilisateur choisit de modifier le seuil de puissance prédéterminé, en utilisant la télécommande du boîtier décodeur par exemple, le nouveau seuil de puissance prédéterminé est mémorisé dans le boîtier décodeur (étape E10)

Les différents seuils de puissance prédéterminés correspondent par exemple à une distance de 1 mètre, de 0,5 mètre. Il est aussi possible de laisser l'utilisateur visiteur ou l'utilisateur résident choisir le niveau de puissance à prendre en compte en agissant sur un curseur affiché sur l'écran du téléviseur. Le curseur peut être déplaçable, grâce à la télécommande, entre un premier repère référencé par « 0% » et un deuxième repère référencé par « 100% », le premier repère correspondant à la détection d'un terminal à une distance importante (par exemple 15 mètres) et le deuxième repère correspondant à la détection d'un terminal à une distance nulle. Les seuils de puissance correspondant au premier repère et au deuxième repère sont par exemple fixés par des opérations de calibration similaires à celles précédemment décrites.

Bien entendu, l'invention n'est pas limitée au mode de réalisation décrit mais englobe toute variante entrant dans le champ de l'invention telle que définie par les revendications.

On a décrit plus tôt que l'assistance pour appairer le terminal au point d'accès consiste à afficher sur l'afficheur un message d'information d'appairage. L'assistance pourrait cependant être différente. L'assistance pourrait notamment consister à appairer directement le terminal au point d'accès, suite à la réception du signal d'accord d'appairage. L'appairage direct en question peut par exemple mettre en œuvre un protocole de type WPS. Les deux types d'assistance peuvent aussi être proposés.

Le message de proposition d'appairage, affiché au cours de l'étape E4, pourrait ainsi proposer trois options :
- une option d'appairage automatique, qui appaire directement le terminal au point d'accès en mettant en œuvre le protocole de type WPS ;
- une option d'appairage manuel, qui affiche le message d'information d'appairage ;
- une option de refus d'appairage, qui conduit directement à l'étape E7.

L'utilisateur sélection l'option de son choix grâce à la télécommande du boîtier décodeur.

Il est bien sûr possible que le point d'accès soit différent d'un boîtier décodeur et que le terminal soit différent d'un téléphone mobile. Le point d'accès est par exemple une passerelle résidentielle, et le terminal est par exemple une tablette.

L'afficheur utilisé, connecté au point d'accès, n'est pas forcément un écran d'un téléviseur, mais peut par exemple être un afficheur intégré au point d'accès lui-même (comme l'écran 2 de la figure 1).

Le point d'accès et le terminal ne sont pas nécessairement un point d'accès Wi-Fi et un terminal Wi-Fi : l'invention s'applique à tout type de protocole de communication dans tout type de réseau sans fil.

L'utilisateur visiteur ne communique pas forcément avec le point d'accès via une télécommande, mais par tout type de canal communication, et par exemple grâce à un téléphone mobile ou à une interface située sur le point d'accès.

Le message d'information d'appairage peut bien sûr contenir des informations différentes de celles qui ont été citées.

## Revendications

1. Procédé d'appairage d'un terminal de type Wi-Fi à un point d'accès de type Wi-Fi connecté à un afficheur, le procédé d'appairage comportant les étapes, mises en œuvre par le point d'accès :
- de détecter (E1) la présence d'un terminal ;
- de détecter (E2) si le terminal se trouve à proximité du point d'accès ;
- si la présence du terminal à proximité du point d'accès est détectée, d'afficher (E4) sur l'afficheur un message de proposition d'appairage du terminal au point d'accès ;
- lorsqu'un signal d'accord d'appairage est reçu, de fournir (E5) une assistance pour appairer le terminal au point d'accès, le procédé d'appairage étant **caractérisé en ce qu'**il comprend en outre l'étape de mémoriser (E7) dans une liste un identifiant d'un terminal pour lequel un signal de refus d'appairage a été reçu et de ne pas afficher le message de proposition d'appairage pour un terminal dont l'identifiant se trouve dans la liste.

2. Procédé d'appairage selon la revendication 1, dans lequel la présence du terminal est détectée lorsque le point d'accès reçoit des trames de requête émises par le terminal.

3. Procédé d'appairage selon la revendication 1, dans lequel la présence du terminal à proximité du point d'accès est détectée lorsque le point d'accès reçoit un signal transmis par le terminal avec une puissance de réception supérieure à un seuil de puissance prédéterminé.

4. Procédé d'appairage selon la revendication 3, comportant les étapes d'afficher sur l'afficheur un message de proposition de modification du seuil de puissance prédéterminé.

5. Procédé d'appairage selon la revendication 4, dans lequel le message de proposition de modification du seuil de puissance prédéterminé est affiché lorsqu'un nombre de signaux de refus d'appairage successifs reçus pour des terminaux différents est supérieur à un seuil de refus prédéterminé.

6. Procédé d'appairage selon la revendication 1, dans lequel le point d'accès est un équipement de type boîtier décodeur ou passerelle.

7. Procédé d'appairage selon la revendication 1, dans lequel l'assistance consiste à appairer directement le terminal au point d'accès.

8. Procédé d'appairage selon la revendication 7, dans lequel l'appairage direct met en œuvre un protocole de type WPS.

9. Procédé d'appairage selon la revendication 1, dans lequel l'assistance consiste à afficher sur l'afficheur un message d'information d'appairage.

10. Procédé d'appairage selon la revendication 9, dans lequel le message d'information d'appairage comporte une clé de chiffrement ou un code QR ou des instructions de mise en œuvre d'un protocole de type WPS.

11. Procédé d'appairage selon la revendication 1, dans lequel l'afficheur est un écran d'un téléviseur.

12. Procédé d'appairage selon la revendication 1, dans lequel l'afficheur est intégré au point d'accès.

13. Boîtier décodeur comportant des moyens de traitement agencés pour mettre en œuvre les étapes du procédé d'appairage selon l'une des revendications précédentes.

14. Passerelle comportant des moyens de traitement agencés pour mettre en œuvre les étapes du procédé d'appairage selon l'une des revendications 1 à 12.

15. Programme d'ordinateur comprenant des instructions pour mettre en œuvre, par un équipement de type boîtier décodeur ou passerelle, les étapes du procédé d'appairage selon l'une des revendications 1 à 12.

16. Moyens de stockage, **caractérisés en ce qu'**ils stockent un programme d'ordinateur comprenant des instructions pour mettre en œuvre, par un équipement de type boîtier décodeur ou passerelle, les étapes du procédé d'appairage selon l'une des revendications 1 à 12.

## Patentansprüche

1. Verfahren zur Paarung eines Endgeräts vom Typ WiFi mit einem Zugangspunkt vom Typ WiFi, der an ein Anzeigegerät angeschlossen ist, wobei das Verfahren zur Paarung die Schritte umfasst, durchgeführt von dem Zugangspunkt:
- Erfassen (E1) des Vorhandenseins eines Endgeräts;
- Erfassen (E2), ob sich das Endgerät in der Nähe des Zugangspunktes befindet;
- wenn das Vorhandensein des Endgeräts in der Nähe des Zugangspunktes erfasst wird, Anzeigen (E4) einer Nachricht eines Vorschlags der Paarung des Endgeräts mit dem Zugangspunkt auf dem Anzeigegerät;
- wenn ein Paarungszustimmungssignal empfangen wird, Bereitstellen (E5) einer Unterstützung zur Paarung des Endgeräts mit dem Zugangspunkt,
wobei das Verfahren zur Paarung **dadurch gekennzeichnet ist, dass** es ferner den Schritt des Speicherns (E7) einer Kennung eines Endgeräts in einer Liste umfasst, für das ein Paarungsablehnungssignal empfangen worden ist, sowie des Nichtanzeigens der Nachricht eines Vorschlags der Paarung für ein Endgerät, dessen Kennung sich in der Liste befindet.

2. Verfahren zur Paarung nach Anspruch 1, bei dem das Vorhandensein des Endgeräts erfasst wird, wenn der Zugangspunkt von dem Endgerät gesendete Anfragerahmen empfängt.

3. Verfahren zur Paarung nach Anspruch 1, bei dem das Vorhandensein des Endgeräts in der Nähe des Zugangspunktes erfasst wird, wenn der Zugangspunkt ein von dem Endgerät übertragenes Signal mit einer Empfangsleistung empfängt, die größer als ein vorbestimmter Leistungsschwellenwert ist.

4. Verfahren zur Paarung nach Anspruch 3, umfassend die Schritte des Anzeigens einer Nachricht eines Vorschlags zur Änderung des vorbestimmten Leistungsschwellenwerts auf dem Anzeigegerät.

5. Verfahren zur Paarung nach Anspruch 4, bei dem die Nachricht eines Vorschlags zur Änderung des vorbestimmten Leistungsschwellenwerts angezeigt wird, wenn eine Anzahl von aufeinanderfolgenden Paarungsablehnungssignalen, die für verschiedene Endgeräte empfangen werden, größer als ein vorbestimmter Ablehnungsschwellenwert ist.

6. Verfahren zur Paarung nach Anspruch 1, bei dem der Zugangspunkt eine Ausrüstung vom Typ Set-Top-Box oder Gateway ist.

7. Verfahren zur Paarung nach Anspruch 1, bei dem die Unterstützung darin besteht, das Endgerät direkt mit dem Zugangspunkt zu paaren.

8. Verfahren zur Paarung nach Anspruch 7, bei dem die direkte Paarung ein Protokoll vom Typ WPS ausführt.

9. Verfahren zur Paarung nach Anspruch 1, bei dem die Unterstützung darin besteht, auf dem Anzeigegerät eine Paarungsinformationsnachricht anzuzeigen.

10. Verfahren zur Paarung nach Anspruch 9, bei dem die Paarungsinformationsnachricht einen Verschlüsselungsschlüssel oder einen QR-Code oder Anweisungen zum Ausführen eines Protokolls vom Typ WPS umfasst.

11. Verfahren zur Paarung nach Anspruch 1, bei dem das Anzeigegerät ein Bildschirm eines Fernsehers ist.

12. Verfahren zur Paarung nach Anspruch 1, bei dem das Anzeigegerät in den Zugangspunkt integriert ist.

13. Set-Top-Box, umfassend Verarbeitungsmittel, die ausgebildet sind, die Schritte des Verfahrens zur Paarung nach einem der vorhergehenden Ansprüche auszuführen.

14. Gateway, umfassend Verarbeitungsmittel, die ausgebildet sind, die Schritte des Verfahrens zur Paarung nach einem der Ansprüche 1 bis 12 auszuführen.

15. Computerprogramm, umfassend Anweisungen zum Ausführen der Schritte des Verfahrens zur Paarung nach einem der Ansprüche 1 bis 12 durch eine Ausrüstung vom Typ Set-Top-Box oder Gateway.

16. Speichermittel, **dadurch gekennzeichnet, dass** sie ein Computerprogramm speichern, das Anweisungen zum Ausführen der Schritte des Verfahrens zur Paarung nach einem der Ansprüche 1 bis 12 durch eine Ausrüstung vom Typ Set-Top-Box oder Gateway umfasst.

## Claims

1. A pairing method for pairing a Wi-Fi type terminal with a Wi-Fi type access point connected to a display, the pairing method comprising the following steps performed by the access point:
- detecting (E1) the presence of a terminal;
- detecting (E2) whether the terminal is in the proximity of the access point;
- if it is detected that the terminal is present in the proximity of the access point, displaying (E4) on the display a message proposing pairing the terminal with the access point;
- when a pairing agreement signal is received, providing (E5) assistance for pairing the terminal with the access point,
the pairing method being **characterized in that** it further comprises the steps of storing (E7) in a list the identifier of a terminal from which a pairing refusal signal has been received and of not displaying the pairing proposal message for a terminal having its identifier in the list.

2. A pairing method according to claim 1, wherein the presence of the terminal is detected when the access point receives request frames transmitted by the terminal.

3. A pairing method according to claim 1, wherein the presence of the terminal in the proximity of the access point is detected when the access point receives a signal transmitted by the terminal with received power greater than a predetermined threshold.

4. A pairing method according to claim 3, including the step of displaying on the display a message proposing modifying the predetermined power threshold.

5. A pairing method according to claim 4, wherein the message proposing adjusting the predetermined power threshold is displayed when a number of successive pairing refusal signals received from different terminals is greater than a predetermined refusal threshold.

6. A pairing method according to claim 1, wherein the access point comprises equipment of the decoder box or gateway type.

7. A pairing method according to claim 1, wherein the assistance consists in pairing the terminal directly with the access point.

8. A pairing method according to claim 7, wherein direct pairing makes use of a WPS type protocol.

9. A pairing method according to claim 1, wherein the assistance consists in displaying a pairing information message on the display.

10. A pairing method according to claim 9, wherein the pairing information message includes an encryption key or a QR code or instructions for using a WPS type protocol.

11. A pairing method according to claim 1, wherein the display is a TV screen.

12. A pairing method according to claim 1, wherein the display is integrated in the access point.

13. A decoder box including processor means arranged to perform the steps of the pairing method according to any preceding claim.

14. A gateway including processor means arranged to perform the steps of the pairing method according to any one of claims 1 to 12.

15. A computer program including instructions for enabling equipment of the decoder box or gateway type to perform the stpes of the pairing method according to any one of claims 1 to 12.

16. Storage means **characterized in that** they store a computer program including instructions for enabling equipment of the decoder box or gateway type to perform the steps of the pairing method according to any one of claims 1 to 12.
